# EUROPEAN PATENT APPLICATION

(11) **EP 2 631 538 A1**
(43) Date of publication of application: **28.08.2013**
(21) Application number: 13150652.9
(22) Date of filing: 09.01.2013
(51) Int. Cl.: F21V 8/00

(54) **Light guide plate, backlight unit including the same, display apparatus, and method of manufacturing the same**

(30) Priority: 21.02.2012 KR 20120017402
(71) Applicant: Samsung Electronics Co., Ltd., Gyeonggi-do 443-742 (KR)
(72) Inventor: Jang, Nae-won, Gyeonggi-do (KR); Hur, Gil-tae, Seoul (KR); Cho, Kun-ho, Gyeonggi-do (KR); Choi, Hyeong-sik, Gyeonggi-do (KR); Hwang, Ju-seong, Chungcheongnam-do (KR)
(74) Representative: Clark, David James

(57) **Abstract**

A light guide plate (220), a backlight unit (200) including the light guide plate, a display apparatus (100) and a method of manufacturing the light guide plate, the light guide plate including: a first body (221) with a first light entry surface (221a) through which light enters; a second body (225) with a light exit surface (225c) through which the incident light exits the first body; and a quantum dot layer (223) disposed between the first body and the second body with a quantum dot which converts a wavelength of the light incident through the light entry surface and is.

## Description

### BACKGROUND

### 1. Field

Apparatuses and methods consistent with the exemplary embodiments relate to a light guide plate, a backlight unit including the same, a display apparatus, and a method of manufacturing the same, and more particularly to a light guide plate which is capable of improving color reproducibility, a backlight unit including the same, a display apparatus, and a method of manufacturing the same.

### 2. Description of the Related Art

A backlight unit is a device that provides light to a liquid crystal display (LCD) panel. Recently, the backlight unit generally employs a structure using a combination of red (R), green (G), and blue (B) light emitting diodes (LEDs, RGB LEDs) to generate white light.

However, the backlight unit using the RGB LEDs has limitations in improving image quality due to inferior color reproducibility.

### SUMMARY

One or more exemplary embodiments may overcome the above disadvantages and other disadvantages not described above. However, it is understood that one or more exemplary embodiment are not required to overcome the disadvantages described above, and may not overcome any of the problems described above.

Accordingly, aspects of one or more exemplary embodiments may be achieved by providing a light guide plate including: a first body which includes a first light entry surface which light enters; a second body which includes a light exit surface through which the light incident through the first body exits; and a quantum dot layer which includes quantum dots converting a wavelength of the light incident through the light entry surface and is disposed between the first body and the second body.

The second body may further include a second light entry surface which the light enters.

The quantum dot layer may include at least one of a blue quantum dot, a green quantum dot, and a red quantum dot.

The quantum dot layer may convert the light incident through the first light entry surface into white light so that the white light is emitted through the light exit surface.

The quantum dot layer may include a green quantum dot, a red quantum dot, and a resin.

The light guide plate may further include an adhesive member disposed between the quantum dot layer and the first body or between the quantum dot layer and the second body.

Another aspects of one or more exemplary embodiments may be achieved by providing a backlight unit providing light to a display panel including: a light source unit which emits light; and a light guide plate which includes a first body including a first light entry surface which light enters, a second body including a light exit surface through which the light incident through the first body exits, and a quantum dot layer including quantum dots converting a wavelength of the light incident through the light entry surface and disposed between the first body and the second body.

The backlight unit may further include a brightness enhancement film improving brightness of the light exiting through the light exit surface.

The light source unit may be disposed on at least one of a lower part and a lateral part of the light guide plate.

The quantum dot layer may include at least one of a blue quantum dot, a green quantum dot, and a red quantum dot.

The quantum dot layer may convert the light incident through the first light entry surface into white light so that the white light is emitted through the light exit surface.

The quantum dot layer may include a green quantum dot, a red quantum dot, and resin.

Still another aspect of one or more exemplary embodiments may be achieved by providing a display apparatus including: a display panel; an external signal input unit which receives an image signal; an image processor which processes the received image signal to be displayed on the display panel; and the foregoing backlight unit which provides light to the display panel.

Still another aspects of one or more exemplary embodiments may be achieved by providing a method of manufacturing a light guide plate, the method including: preparing a first body including a first light entry surface which light enters and a second body including a light exit surface through which the light incident through the first body exits; forming a quantum dot layer on any one of an opposite surface of the first body and an opposite surface of the second body; combining the first body and the second body with placing the quantum dot layer disposed therebetween.

The combining the first body and the second body may include placing an adhesive member on the other of the opposite surfaces of the first body and the second body; and pressing the first body and the second body so that the quantum dot layer and the adhesive member are bonded to each other.

The forming the quantum dot layer on any one of the opposite surfaces of the first body and the second body may include coating any one of the opposite surfaces with a quantum dot material including a green quantum dot and a red quantum dot and resin.

The method may further include forming protection layers on lateral end portions of the first body and the second body.

According to the present invention there is provided an apparatus and method as set forth in the appended claims. Other features of the invention will be apparent from the dependent claims, and the description which follows.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 is a block diagram of a display apparatus according to an exemplary embodiment.
FIG. 2 is a schematic cross-sectional view of a display unit of the display apparatus of FIG. 1.
FIG. 3 illustrates a method of manufacturing a light guide plate of the display unit of FIG. 2.
FIG. 4A illustrates a color reproduction range by a light guide plate of a related art.
FIG. 4B illustrates a color reproduction range by the light guide plate of the display unit of FIG. 2.
FIG. 5 is a flowchart illustrating the method of manufacturing the light guide plate.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity and conciseness, and like reference numerals refer to like elements throughout.

Hereinafter, a light guide plate, a backlight unit including the same, a display apparatus, and a method of manufacturing the light guide plate according to one or more exemplary embodiments will be described in detail with reference to the accompanying drawings.

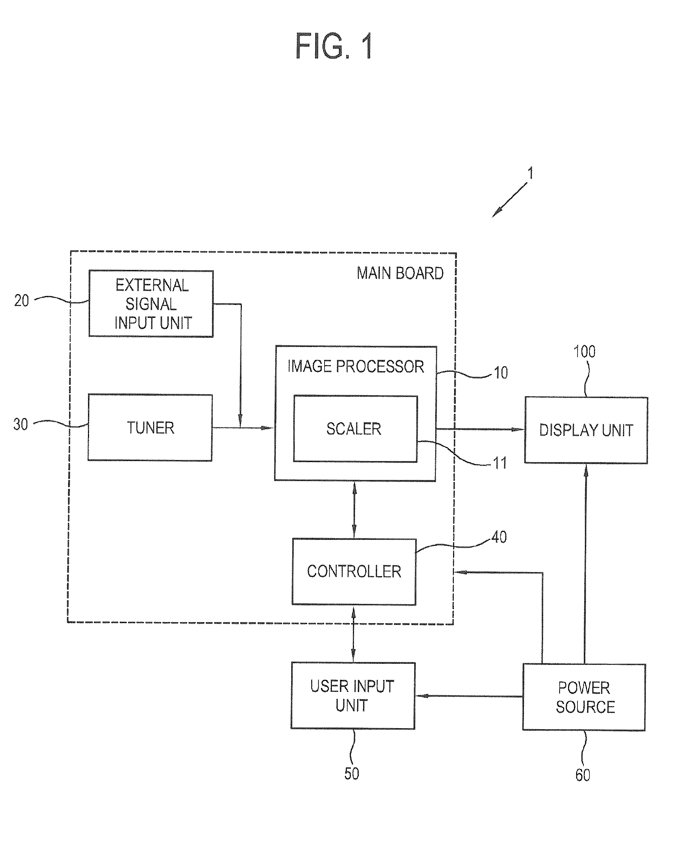

Referring to FIG. 1, the display apparatus 1 according to the present embodiment includes a display unit 100, a tuner 30 receiving a broadcast signal provided by a broadcasting station, an external signal input unit 20 receiving an external image signal, such as a digital versatile disk (DVD) signal, an image processor 10 processing a broadcast signal received through the tuner 30 or an image signal received from an external imaging device, such as a DVD to display an image on the display unit 100, a controller 40 controlling the image processor 10, and a powers source 60 supplying power to the display unit 100, the image processor 10, the tuner 30, and the controller 40. Here, any one of the external signal input unit 20 and the tuner 30 may be omitted as necessary.

The image processor 10 may further include a scaler 11 to output a scaled image signal corresponding to a resolution of the display unit 100. That is, the image processor 10 performs an analog to digital (A/D) conversion, a digital decoding, and a format conversion to convert various formats of input image signals into a predetermined format of digital image signals according to a control by the controller 40. The scaler 11 may perform a scaling function of adjusting a vertical frequency, a resolution and a screen ratio of input digital image signals or/and analog signals in accordance with an output standard of the display unit 100.

Here, the power source 60 may supply power to a display panel 110 and a backlight unit 200 of the display unit 100.

The tuner 30, the external signal input unit 20, the image processor 10, and the controller 40 may be installed on a single main board. However, such a structure is merely an illustrative example, and at least one of the above components may be provided on a separate board.

The display apparatus 1 according to the present embodiment may further include a user input unit 50. The user input unit 50 may be provided as at least one of a remote controller and a front panel.

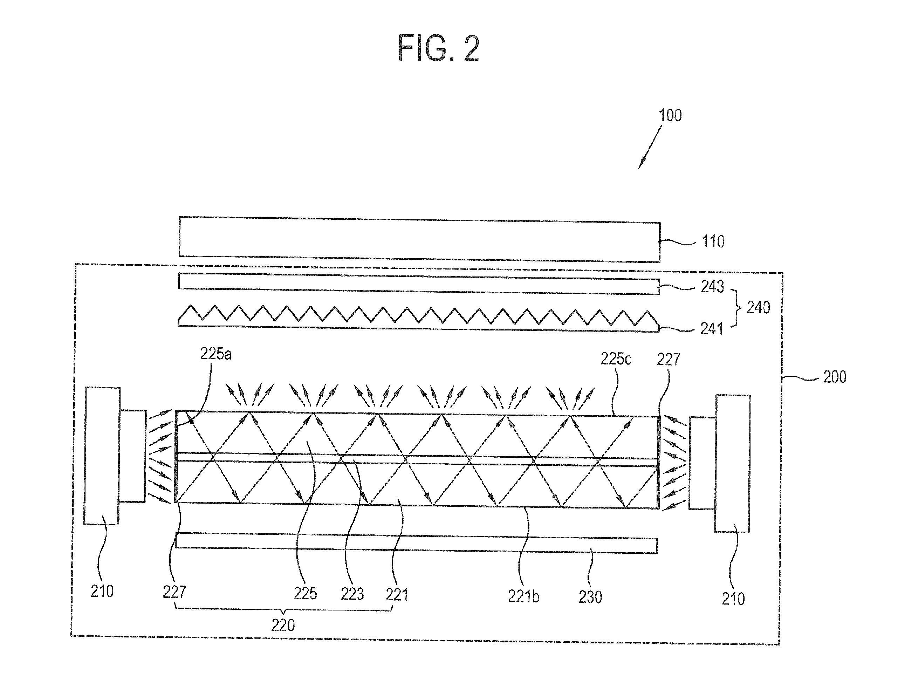

As shown in FIG. 2, the display unit 100 includes the display panel 110 and the backlight unit 200 providing light to the display panel 110.

The display panel 110 includes a thin film transistor (TFT) substrate (not shown), a color filter substrate (not shown) disposed to face the TFT substrate, and liquid crystals (not shown) interposed between the TFT substrate and the color filter substrate.

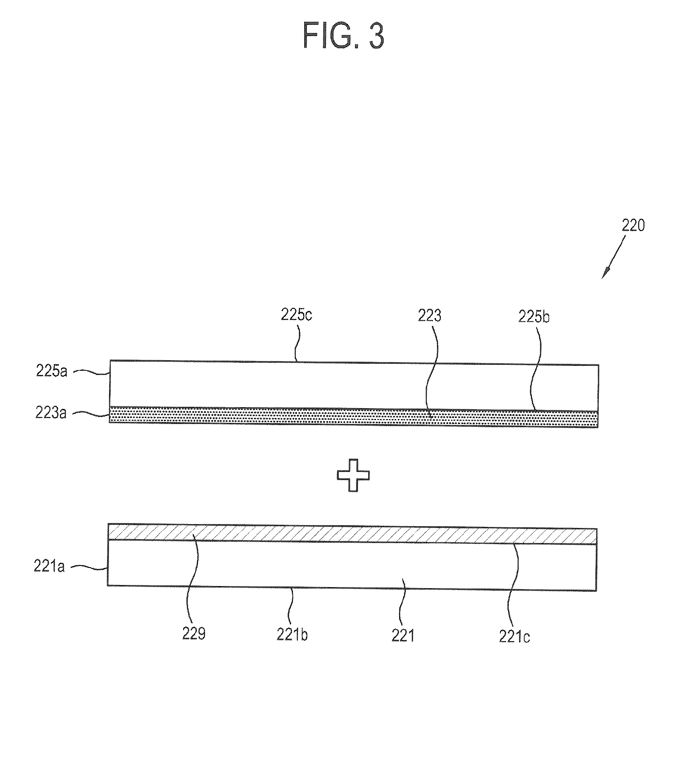

Referring to FIGs. 2 and 3, the backlight unit 200 includes a light source unit 210 generating and providing light to the display panel 10; a light guide plate 220 guiding the light generated by the light source unit 210 to the display panel 110; a reflection member 230 disposed to face the display panel 110, with the light guide plate 220 disposed between the reflection member 230 and the display panel 110. Reflecting light passes through the light guide plate 220 toward the display panel 110 and an optical sheet 240 improves brightness of light emitted through a light exit surface 225c of the light guide plate 220.

Here, the optical sheet 240 and the reflection member 230 may be omitted as necessary.

The light source unit 210 may include a plurality of light emitting diodes (LEDs) disposed lengthwise.

As shown in FIG. 2, the light source unit 210 may be disposed at an edge of the light guide plate 220. In detail, the light source units 210 may be disposed on right and left sides of the light guide plate 220 in a width direction of the light guide plate 220 turned toward each other. As necessary, as an exemplary embodiment, the light source units 210 may be disposed up and down sides in the lengthwise direction of the light guide plate 220. Also, the light source units 210 may be disposed right, left, up, and down sides in the directions of width and length of the light guide plate 220. That is, the light source units 210 may be disposed at four edges of the light guide plates 220. Alternatively, the light source units 210 may be disposed on either right or left side and disposed on either up or down side.

If necessary, as another exemplary embodiment, the light source unit 210 may be disposed below the light guide plate 220. In detail, the light source unit 210 may be disposed below the light guide plate 220 in the lengthwise direction of the light guide plate 220 turned toward the display panel 210. That is, the light source unit 210 may be provided as so-called direct-type LEDs.

The light source unit 210 may be provided to emit a blue light or an ultraviolet light. Specifically, the light source unit 210 may be provided as the blue LED or the ultraviolet LED.

The light guide plate 220 includes a first body 221, a second body 225, a quantum dot layer 223 disposed between the first body 221 and the second body 225.

The first body 221 may be formed of a material having an adequate refractive index to totally reflect light incident from the light source unit 210 internally. For example, the first body 221 may be formed of polymethyl methacrylate (PMMA). The first body 221 may also be formed of polycarbonate (PC) having an excellent moisture resistance and a heat resistance to reduce transfer of moisture or heat to the quantum dot layer 223.

The second body 225 may be formed of a material having an adequate refractive index to totally reflect light incident through the first body 221 or from the light source unit 210 internally as well. For example, the second body 225 may be formed of PMMA. The second body 225 may also be formed of PC having excellent moisture resistance and heat resistance to reduce transfer of moisture or heat to the quantum dot layer 223.

The first body 221 and the second body 225 may be formed of the same material. As needed, the first body 221 and the second body 225 may be formed of different materials to each other.

The first body 221 includes a first light entry surface 221a which light emitted from the light source unit 210 enters. The first body 221 includes a light reflection surface 221b to reflect light incident through the first light entry surface 221a to the second body 225. The light passing through the light reflection surface 221b b is reflected by the reflection member 230 to pass through the light reflection surface 221b again and enters the first body 221.

A notch shape (not shown) may be formed on the light reflection surface 221b to create total reflection conditions for totally reflecting light passing through the first light entry surface 221a.

The first body 221 includes a first opposite surface 221c facing the second body 225. Light incident to the first light entry surface 221a is guided to the second body 225 through the first opposite surface 221c.

An adhesive member 229 adhesively combined with the quantum dot layer 223 may be disposed on the first opposite surface 221c. The adhesive member 229 may be an optically clear adhesive (OCA) film. The adhesive member 229 may be provided by coating the first opposite surface 221c with a transparent adhesive material.

The second body 225 includes a second light entry surface 225a which light from the light source unit 210 enters, a second opposite surface 225b facing the first body 221, and the light exit surface 225c through which light exits, the light having a wavelength change while passing through the quantum dot layer 223.

Light incident through the second light entry surface 225a may be refracted toward the first body 221 so as to pass through the quantum dot layer 223.

Fine protrusions (not shown) in a prism or lenticular shape may be formed on the light exit surface 225c to collect light exiting through the light exit surface 225c.

The quantum dot layer 223 may be formed on at least one of the first opposite surface 221c of the first body 221 and the second opposite surface 225b of the second body 225. The quantum dot layer 223 may be formed by coating at least one of the first opposite surface 221c and the second opposite surface 225b with a material including quantum dots, which will be described. If needed, the quantum dot layer 223 may be provided as a film including quantum dots.

The quantum dot layer 223 converts a wavelength of light emitted from the light source unit 210.

The quantum dot layer 223 may include at least one of a blue quantum dot, a green quantum dot, and a red quantum dot.

For example, if the light source unit 210 is provided as a blue LED emitting blue light, the quantum dot layer 223 may include a green and a red quantum dots so that light exiting through the light exit surface 225c of the light guide plate 220 has a white color. If the light source unit 210 is provided as a UV LED emitting ultraviolet light, the quantum dot layer 223 may include a blue, a green, and a red quantum dots to convert a wavelength of the ultraviolet light into a wavelength of a white light.

The quantum dot layer 223 may properly include at least one of a blue, a green, and a red quantum dots to convert a wavelength of light emitted from the light source unit 210 to a desired wavelength of light.

The quantum dot layer 223 may further include a resin to evenly distribute the quantum dots in addition to a predetermined color of the quantum dots.

The quantum dot layer 223 is vulnerable to moisture and temperature and thus is provided inside the light guide plate 220 to strengthen the vulnerability. That is, the light guide plate 220 functions as a barrier which prevents moisture and temperature from directly affecting the quantum dot layer 223. Accordingly, the quantum dot layer 223 may maintain light wavelength conversion performance for a long period of time and improve durability of the entire backlight unit 200.

In addition, a wavelength of light is converted by the quantum dot layer 223, thereby remarkably improving color reproducibility.

The light guide plate 220 may further include protection layers 227 applied to lateral end portions of the first body 221 and the second body 225.

The protection layers 227 are provided to protect lateral end portions 223a of the quantum dot layer 223 disposed between the first body 221 and the second body 225 and exposed to the outside. That is, the protection layers 227 serve to block transfer of moisture and heat directly to the lateral end portions 223a of the quantum dot layer 223 in the widthwise direction.

The protection layers 227 may include a sealant. The protection layers 227 may be provided as a film.

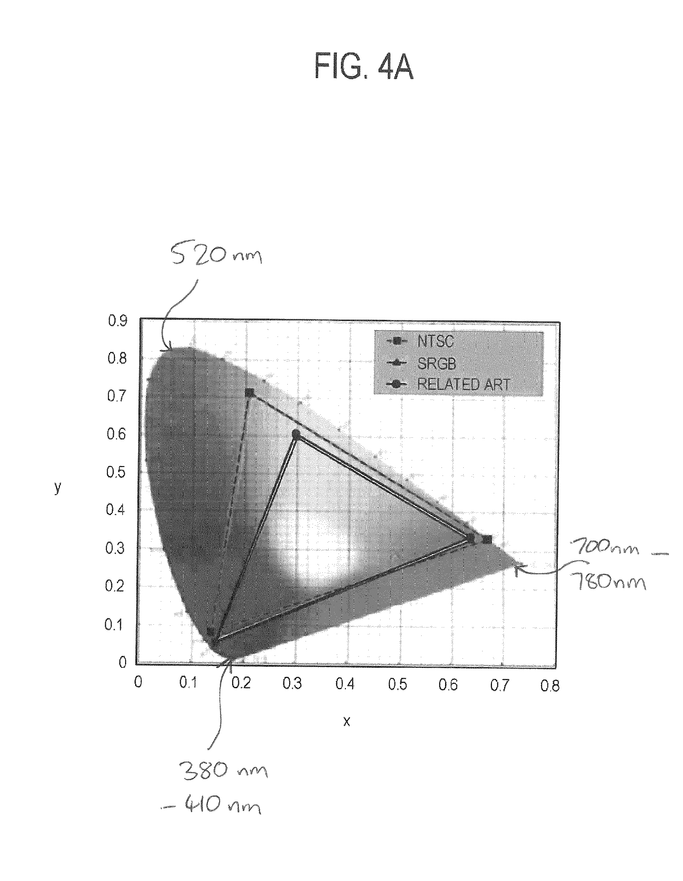

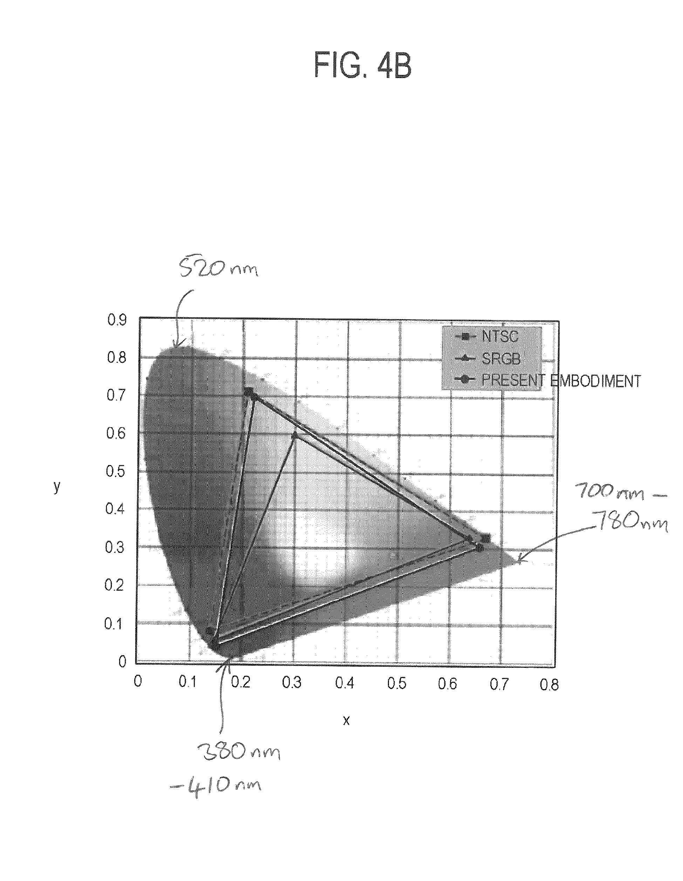

FIGs. 4A and 4B are chromaticity diagrams illustrating improvements in color reproducibility due to use of the quantum dot layer 223. Color values are indicated using wavelengths of light, namely 380nm-410nm for violet, 520nm for green and 700nm-780nm for red.

In FIGs. 4A and 4B, "NTSC" indicates a color reproduction range in accordance with an National Television System Committee (NTSC) standard, and "sRGB" indicates a color reproduction range in accordance with a sRGB standard.

In FIG. 4A, "related art" indicates a color reproduction range in use of a backlight unit of a related art which autonomously emits white light using RGB LEDs. In FIG. 4B, "present embodiment" indicates a color reproduction range in use of the backlight unit 200 according to the present embodiment.

Here, the backlight unit of the related art using RGB LEDs realizes about 75% of the color reproduction range in accordance with the NTSC standard and about 98% of the color reproduction range in accordance with the sRGB standard.

However, as shown in FIG. 4B, the backlight unit according to the present embodiment realizes 95% of the color reproduction range in accordance with the NTSC standard and up to 110% of the color reproduction range in accordance with the sRGB standard. Accordingly, when a light is converted by the quantum dot layer 223, the quantum dot layer remarkably improves color reproducibility.

In FIG. 2, the optical sheet 240 may include a prism sheet 241 to collect light exiting through the light exit surface 225c of the light guide plate 220 and a brightness enhancement film 243 improving brightness of the collected light.

Here, since the quantum dot layer 223 may function to not only convert a wavelength of light but also diffuse the light, a diffusion film may be omitted in the backlight unit 200 according to the present embodiment. If necessary, at least one of the prism sheet 241 and the brightness enhancement film 243 may be omitted as necessary. Accordingly, fewer optical sheets are needed, thereby reducing manufacturing costs and the number of working processes.

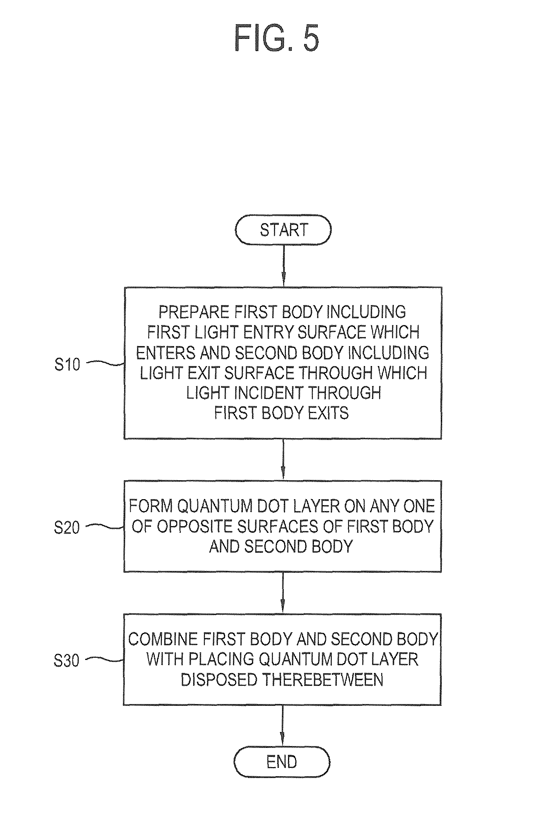

Hereinafter, a method of manufacturing the light guide plate according to an embodiment will be described with reference to FIGs. 2, 3, and 5.

First, the first body 221 including the first light entry surface 221a which light enters and the second body 225 including the light exit surface 225c through which incident light through the first body 221 exits are prepared (S10).

Then, the quantum dot layer 223 is formed on any one of the opposite surfaces 221c and 225b of the first body 221 and the second body 225 (S20).

The first body 221 and the second body 225 are combined, with the quantum dot layer 223 disposed therebetween.

Here, the first body 221 and the second body 225 may be combined with each other by placing the adhesive member 229 on one of the opposite surfaces 221c and 225b and pressing the first body 221 and the second body 225 so that the quantum dot layer 223 and the adhesive member 229 are bonded to each other.

Here, forming the quantum dot layer 223 on any one of the opposite surfaces 221c and 225b may include coating any one of the opposite surfaces 221c and 225b with a quantum dot material including a green quantum dot and a red quantum dot and a resin.

In addition, the method of manufacturing the light guide plate 220 may further include forming the protection layers 227 on the lateral end portions of the first body 221 and the second body 225. Accordingly, the lateral end portions 223a of the quantum dot layer 223 are not exposed directly to the outside.

Although a few exemplary embodiments have been shown and described, it will be appreciated by those skilled in the art that changes may be made in these exemplary embodiments without departing from the principles of the invention, the scope of which is defined in the appended claims. The exemplary embodiments should be considered in a descriptive sense only.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A light guide plate comprising:
a first body comprising a first light entry surface through which light enters;
a second body comprising a light exit surface through which the incident light exits the first body; and
a quantum dot layer disposed between the first body and the second body comprising quantum dots converting a wavelength of the incident light through the light entry surface .

2. The light guide plate of claim 1, wherein the second body further comprising a second light entry surface through which the light enters.

3. The light guide plate of claim 1, wherein the quantum dot layer further comprising at least one of among a blue quantum dot, a green quantum dot, and a red quantum dot.

4. The light guide plate of claim 1, wherein the quantum dot layer converts the light incident through the first light entry surface into white light such that the white light exits through the light exit surface.

5. The light guide plate of claim 1, wherein the quantum dot layer further comprising a green quantum dot, a red quantum dot, and a resin.

6. The light guide plate of claim 1 further comprising an adhesive member disposed between the quantum dot layer and the first body or between the quantum dot layer and the second body.

7. A backlight unit providing light to a display panel comprising:
a light source unit which emits light; and
a light guide plate comprising:
a first body comprising a first light entry surface which light enters;
a second body comprising a light exit surface through which the incident light exits the first body; and
a quantum dot layer disposed between the first body and the second body comprising a quantum dot converting a wavelength of the light incident through the light entry surface.

8. The backlight unit of claim 7, further comprising a brightness enhancement film which improves brightness of the light exiting through the light exit surface.

9. The backlight unit of claim 7, wherein the light source unit is disposed on at least one of a lower part and a lateral part of the light guide plate.

10. The backlight unit of claim 7, wherein the quantum dot layer further comprising at least one of among a blue quantum dot, a green quantum dot, and a red quantum dot.

11. The backlight unit of claim 7, wherein the quantum dot layer converts the light incident through the first light entry surface into white light such that the white light exits through the light exit surface.

12. The backlight unit of claim 7, wherein the quantum dot layer further comprising a green quantum dot, a red quantum dot, and resin.

13. A display apparatus comprising:
a display panel;
an external signal input unit which receives an image signal;
an image processor which processes the received image signal to be displayed on the display panel; and
the backlight unit which provides light to the display panel according to claim 7.

14. A method of manufacturing a light guide plate, the method comprising:
preparing a first body comprising a first light entry surface through which light enters and a second body comprising a light exit surface through which the incident light exits the first body;
forming a quantum dot layer on any one of a first opposite surface of the first body and a second opposite surface of the second body;
combining the first body and the second body with placing the quantum dot layer disposed between the first body and the second body.

15. The method of claim 14, wherein the combining the first body and the second body comprises:
placing an adhesive member on the other one of the first and second opposite surfaces of the first body and the second body; and
pressing the first body and the second body such that the quantum dot layer and the adhesive member are bonded to each other.
